(19) Europäisches Patentamt
European Patent Office
Office européen des brevets

(11) EP 0 573 358 B1

(12) FASCICULE DE BREVET EUROPEEN

(45) Date de publication et mention
de la délivrance du brevet:
**22.09.1999 Bulletin 1999/38**

(51) Int Cl.⁶: **G10L 3/02**, G10L 9/14

(21) Numéro de dépôt: **93401413.5**

(22) Date de dépôt: **02.06.1993**

(54) **Procédé et dispositif de synthèse vocale à vitesse variable**

Verfahren und Vorrichtung zur Sprachsynthese mit variabler Geschwindigkeit

Variable speed voice synthesizer method and apparatus

(84) Etats contractants désignés:
**DE FR GB IT NL**

(30) Priorité: **05.06.1992 FR 9206835**

(43) Date de publication de la demande:
**08.12.1993 Bulletin 1993/49**

(73) Titulaire: **THOMSON-CSF**
**75008 Paris (FR)**

(72) Inventeur: **Vigier, Alain**
**F-92402 Courbevoie Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**WO-A-91/06092** **US-A- 4 709 390**

## Description

La présente invention concerne un procédé et un dispositif de synthèse vocale à vitesse variable.

Elle s'applique notamment à la réalisation de vocodeurs à faible débit.

De nombreux équipements tels que des dictaphones, des répondeurs téléphoniques, des systèmes de messagerie vocale permettent de mémoriser un message vocal pour le synthétiser ultérieurement aux convenances des utilisateurs.

Une fonctionnalité particulièrement intéressante pour ces équipements est de leur donner la possibilité de synthétiser des messages enregistrés à une vitesse différente de leur vitesse nominale d'enregistrement. Une vitesse lente peut permettre de prendre des notes et une vitesse rapide d'avoir un aperçu du contenu d'un message ou d'écouter plus vite les parties d'un message présentant moins d'importance.

Lorsque ces fonctionnalités sont réalisées de manière analogique, elles présentent les inconvénients que la synthèse à vitesse rapide décale le spectre du signal de parole vers les hautes fréquences et les voix reconstituées sont anormalement aiguës et que la synthèse à vitesse lente décale le spectre du signal de parole vers les basses fréquences d'où il apparaît que la voix est anormalement grave. Pour des rapports moitié ou double relativement à la vitesse nominale, ces phénomènes rendent le message totalement inintelligible.

Dans les systèmes de synthèse numérique du signal de parole la synthèse a généralement lieu par excitation de filtres prédicteurs à long et court terme par des formes d'ondes sélectionnées dans un dictionnaire constitué par apprentissage. Cette synthèse numérique est décrite dans le document WO 91/06092, qui est considéré ici comme l'état de la technique le plus proche. Une analyse temporelle du signal de parole a alors lieu en extrayant du signal de parole durant des intervalles de temps prédéterminés, de l'ordre de 20 à 30 ms, la fréquence fondamentale encore dénommée par "pitch" dans le langage anglo-saxon du signal de parole, et à le segmenter en éléments dont certains sont dupliqués et d'autres supprimés. Mais le fait que certains paramètres soient supprimés ou remplacés par d'autres qui sont dupliqués rend généralement la restitution du signal de parole imparfaite.

Le but de l'invention est de pallier les inconvénients précités.

A cet effet, l'invention a pour objet un procédé de synthèse vocale à vitesse variable suivant lequel le signal est découpé en trames et sous-trames respectivement de N et L échantillons de parole et est reconstitué à partir d'une sélection de formes d'ondes dans un dictionnaire pendant des intervalles de temps prédéterminés pour exciter des filtres prédicteurs à long et court terme caractérisé en ce qu'il consiste à modifier la durée d'excitation du filtre prédicteur à long terme et les plages de calcul des filtres prédicteurs en fonction de la vitesse de synthèse du signal vocal sans modifier les valeurs du pitch du signal vocal appliqué sur le prédicteur à long terme.

L'avantage du procédé est qu'il permet par de simples modifications du dispositif de synthèse des vocodeurs numériques de lire un message enregistré à vitesse variable. Il a également pour autre avantage qu'il peut être appliqué à tous les systèmes de codage de la parole fonctionnant sur les principes d'analyse par synthèse. Il permet entre autres de conserver au signal synthétique lu à une vitesse différente de sa vitesse d'enregistrement le même pitch et les mêmes caractéristiques spectrales que le signal synthétique obtenu pour la vitesse nominale d'enregistrement.

D'autres caractéristiques et avantages de l'invention apparaîtront à l'aide de la description qui suit faite en regard des dessins annexés qui représentent :

- la figure 1 un dispositif de synthèse d'un signal de parole selon l'art connu ;
- la figure 2 les formes d'ondes générées par le générateur d'excitation du dispositif représenté à la figure 1 ;
- la figure 3 une structure d'un filtre prédicteur à long terme ;
- la figure 4 une structure d'un filtre prédicteur à court terme.

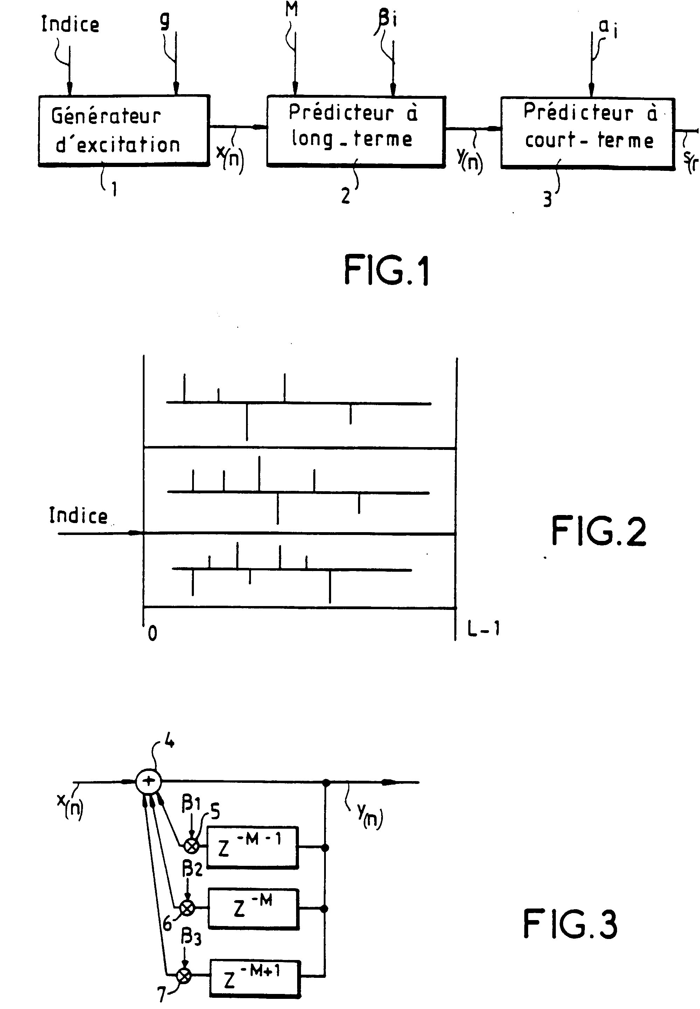

Comme cela est représenté sur la figure 1 un dispositif de synthèse d'un signal de parole comporte classiquement trois modules formés d'un générateur d'excitation 1 suivi d'un prédicteur à long terme 2 et d'un prédicteur à court terme 3, ces modules étant reliés dans cet ordre en série. Le générateur d'excitation 1 applique par exemple à une cadence d'environ de 7,5 ms des formes d'ondes particulières du type de celles qui sont représentées à la figure 2 à l'entrée du prédicteur à long terme 2. Les formes d'ondes sont contenues dans un dictionnaire, elles représentent des sons voisés et non voisés du signal de parole. Ces formes d'ondes qui sont constituées de suites d'un nombre déterminé L d'échantillons $e_{(n)}$ sont multipliées par un coefficient g représentatif de l'énergie du signal de parole. Les échantillons $x_{(n)}$ obtenus sont transformés par le prédicteur à long terme 2 en échantillons $y_{(n)}$ définis par une relation de la forme

$$y_{(n)} = x_{(n)} + \beta_1 \cdot y_{(n-M-1)} + \beta_2 \, y_{(n-M)} + \beta_3 \cdot y_{(n-M+1)} \qquad (1)$$

où M est un coefficient qui caractérise la valeur du pitch du signal de parole et $\beta_1$, $\beta_2$ et $\beta_3$ sont des coefficients énergétiques. Un prédicteur correspondant comporte de la manière représentée par exemple à la figure 3, un circuit additionneur 4 et trois circuits multiplieurs 5, 6 et 7 pour ajouter à chaque valeur d'échantillon $x_{(n)}$ les produits

$$\beta_1 \cdot y_{(n-M-1)}, \quad \beta_2 \cdot y_{(n-M)} \text{ et } \beta_3 \cdot y_{(n-M+1)}$$

Enfin le signal synthétique $S_{(n)}$ du signal de parole est obtenu en faisant subir aux échantillons $y_{(n)}$ fournis par le prédicteur à long terme 2 une transformation de la forme

$$S_{(n)} = y_{(n)} + \sum_{i=1}^{P} a_i \cdot S_{(n-i)} \qquad (2)$$

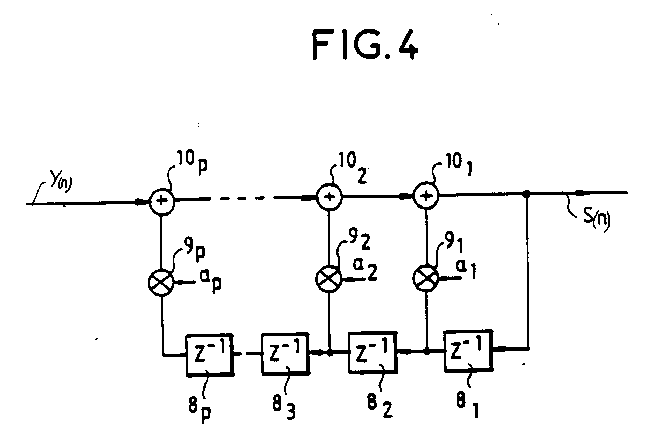

où les coefficients $a_i$ représentent les paramètres spectraux qui permettent de modéliser les propriétés spectrales du signal de parole. Un prédicteur correspondant peut être construit au moyen d'un filtre numérique récursif du type de celui qui est représenté à la figure 4 comportant p registres $8_1$ à $8_p$ reliés en série, couplés respectivement à p circuits multiplieurs $9_1$ à $9_p$ pour réaliser les produits $a_i \cdot S_{n-i}$, et comportant p circuits additionneurs pour réaliser la somme

$$y_{(n)} + \sum_{i=1}^{p} a_i \cdot S_{(n-i)}$$

Typiquement pour une segmentation du signal de parole en trames de 30 ms pendant lesquelles il peut être considéré que le signal est stationnaire les formes d'ondes $x_{(n)}$ fournies par le générateur d'excitation 1 correspondent à des sous-trames d'environ 7,5 ms du signal de parole et sont mises à jour à chaque sous-trame. Les paramètres $\beta_i$ du prédicteur à long terme 2 sont également mis à jour à chaque sous-trame, ces paramètres comportant typiquement 1 à 3 coefficients. Les coefficients $a_i$ du prédicteur à court terme 3 qui représentent les paramètres spectraux du signal de parole sont mis à jour une fois par trame de 30 ms. Le procédé selon l'invention consiste à modifier chacun de ces trois modules de synthèse sans avoir à modifier les paramètres d'analyse caractéristique du message. Il permet de ce fait de synthétiser les messages à une vitesse variable tout en conservant le pitch et les propriétés spectrales du signal. Ceci est obtenu en conservant la même découpe du signal en trames et sous-trames et les paramètres calculés sur chaque trame en modifiant cependant la taille initiale N du nombre d'échantillons de chaque trame initiale en trames de taille variable $N_{var}$ et les sous-trames de taille L initiale en sous-trames variables de taille $L_{var}$ en veillant à conserver le rapport $L_{var}/L$ égal au rapport $N_{var}/N$ et égal à r, où r est le taux de vitesse variable. Pour r plus grand que 1 la vitesse sera lente et pour r plus petit que 1 la vitesse sera rapide.

Pour ce faire le générateur d'excitation 1 délivre une excitation $e_{(n)}$ de n échantillons (n = O, L-1) qui est choisie dans un dictionnaire en fonction d'un indice d'excitation. L'excitation $e_{(n)}$ est modifiée de façon qu'à l'initialisation $e_{var(n)} = 0$ pour n=0 à $L_{var}$-1 et qu'au cours de calcul $e_{var}(NINT(rn))=e_{(n)}$ pour n = 0 à L-1, où NINT est la fonction entière la plus proche.

Ceci permet de réaliser une dilatation pour r plus grand que 1 ou une contraction pour r plus petit que 1 des formes d'excitation. Le même gain g est appliqué sur l'excitation ce qui donne pour chaque sous-trame un signal de la forme

$$x_{Var(n)} = g \, e_{va(n)} \text{ pour } n = 0 \text{ à } L_{var}-1$$

De même la plage de calcul du prédicteur à long terme 2 est modifiée en fonction de l'indice n qui prend des valeurs de n égal zéro à $L_{var}$-1 et la plage de calcul du prédicteur à court terme est modifiée en modifiant l'indice n de la valeur n égale zéro à $N_{var}$-1. Le procédé qui vient d'être décrit permet de la sorte par un ajustement de la plage de calcul du système de synthèse de lire un message enregistré à vitesse variable. La principale modification intervient dans le générateur d'excitation où une dilatation ou une contraction est appliquée à l'excitation extraite du dictionnaire. Une alternative à cette transformation peut consister à faire une interpolation pour les vitesses lentes ou une décimation pour une vitesse rapide de l'excitation. Le procédé qui vient d'être décrit peut naturellement être appliqué sur tout système de codage de parole fonctionnant sur les principes d'analyse par synthèse. Il permet de conserver au signal synthétique lu à une vitesse différente de sa vitesse d'enregistrement le même pitch et les mêmes caractéristiques spectrales que le signal synthétique obtenu pour la vitesse nominale d'enregistrement.

**Revendications**

1. Procédé de synthèse vocale à vitesse variable suivant lequel le signal est découpé en trames et sous-trames respectivement de N et L échantillons de parole et est reconstitué à partir d'une sélection de formes d'ondes ($x_n$) dans un dictionnaire pendant des intervalles de temps prédéterminés pour exciter (1) des filtres prédicteurs à long (2) et court terme (3) caractérisé en ce qu'il consiste à modifier la durée ($L_{var}$) d'excitation du filtre prédicteur à long terme (2) et les plages de calcul ($L_{var}$,$N_{var}$) des filtres prédicteurs en fonction de la vitesse de synthèse du signal vocal sans modifier les valeurs du pitch du signal vocal appliquées sur le prédicteur à long terme (2).

2. Procédé selon la revendication 1 caractérisé en ce qu'il consiste à modifier la taille $N_{var}$ des trames et la taille $L_{var}$ de sous-trames par rapport à une taille N de trame initiale et une taille L de sous-trame initiale dans un rapport constant r tel que :

$$r = \frac{L_{var}}{L} = \frac{N_{var}}{N}$$

3. Procédé selon la revendication 2 caractérisé en ce qu'il consiste à dilater la taille initiale N des échantillons d'excitation pour diminuer la vitesse de synthèse, et à contracter leur taille initiale N pour augmenter la vitesse de synthèse.

4. Procédé selon les revendications 2 et 3 caractérisé en ce que chaque forme d'onde $x_{(n)}$ du dictionnaire est transformé en un signal $Y_{(n)}$ suivant la relation

$$y_{(n)} = x_{(n)} + \beta_1\, y_{(n-M-1)} + \beta_2\, y_{(n-M)} + \beta_3\, y_{(n-M+1)} \tag{1}$$

où $\beta_1$, $\beta_2$, $\beta_3$ sont des coefficients énergétiques, M est un coefficient représentant la valeur du pitch du signal de parole, et dans laquelle n prend les valeurs de n=0 à $L_{var}$-1.

5. Procédé selon l'une quelconque des revendications 2 à 4 caractérisé en ce que le signal $y_{(n)}$ fourni par le prédicteur à long terme est transformé en un signal $S_n$ suivant la relation :

$$S_{(n)} = y_{(n)} + \sum_{i=1}^{P} a_i \cdot S_{(n-i)} \tag{2}$$

suivant laquelle les paramètres $a_i(i=1,...,p)$ représentent des paramètres spectraux de modélisation du signal de parole et dans laquelle n prend les valeurs de n=0 à $N_{var}$-1.

6. Dispositif pour la mise en oeuvre d'un procédé de synthèse vocale à vitesse variable suivant lequel le signal est découpé en trames et sous-trames, caractérisé par

   a) un générateur d'excitation faisant une sélection de formes d'ondes dans un dictionnaire pendant des intervalles prédéterminés,
   b) un prédicteur à long terme, et
   c) un prédicteur à court terme, couplés dans cet ordre en série,
   et dans lequel
   d) le générateur dispose de moyens de fournir un signal d'excitation de durée variable, et
   e) les prédicteurs ont des moyens pour rendre variables les plages de calcul en fonction de la vitesse de synthèse du signal vocal sans modification des valeurs du pitch du signal vocal appliquées sur le prédicteur à long terme.

**Patentansprüche**

1. Verfahren zur Sprachsynthese mit variierbarer Geschwindigkeit, bei dem das Signal in Rahmen und Unterrahmen von N beziehungsweise L Sprachtastproben zerlegt wird und ausgehend von einer Auswahl von Wellenformen ($x_{(n)}$) aus einem Thesaurus während vorbestimmter Zeitintervalle wiederhergestellt wird, um Langzeit-Vorhersagefilter (2) und Kurzzeit-Vorhersagefilter (3) anzuregen (1), dadurch gekennzeichnet, daß es darin besteht, die Dauer ($L_{var}$) der Anregung des Langzeit-Vorhersagefilters (2) und die Rechenbereiche ($L_{var}$, $N_{var}$) der Vorhersagefilter abhängig von der Geschwindigkeit der Synthese des Sprachsignals zu verändern, ohne zugleich die Pitchwerte des an das Langzeit-Vorhersagefilter (2) angelegten Sprachsignals zu verändern.

2. Verfahren nach Anspruch 1, dadurch gekennzeichnet, daß es darin besteht, die Größe $N_{var}$ der Rahmen und die Größe $L_{var}$ von Unterrahmen bezüglich einer Größe N des ursprünglichen Rahmens und einer Größe L des ursprünglichen Unterrahmens in einem konstanten Verhältnis r zu verändern, sodaß gilt:

$$r = L_{var}/L = N_{var}/N$$

3. Verfahren nach Anspruch 2, dadurch gekennzeichnet, daß es darin besteht, die ursprüngliche Größe N der Anregungstastproben zu dehnen, um die Synthesegeschwindigkeit zu verringern, beziehungsweise die ursprüngliche Größe N zu komprimieren, um die Synthesegeschwindigkeit zu erhöhen.

4. Verfahren nach den Ansprüchen 2 und 3, dadurch gekennzeichnet, daß jede Wellenform $x_{(n)}$ des Thesaurus in ein Signal $y_{(n)}$ gemäß folgender Gleichung transformiert wird:

$$y_{(n)} = x_{(n)} + \beta_1 \cdot y_{(n-M-1)} + \beta_2 \cdot y_{(n-M)} + \beta_3 \cdot y_{(n-M+1)} \tag{1}$$

wobei $\beta_1$, $\beta_2$ und $\beta_3$ Energiekoeffizienten sind und M ein Koeffizient ist, der den Pitchwert des Sprachsignals darstellt, und wobei n die Werte von n = 0 bis n = $L_{var}$-1 annimmt.

5. Verfahren nach einem beliebigen der Ansprüche 2 bis 4, dadurch gekennzeichnet, daß das Signal $y_{(n)}$, das vom Langzeit-Vorhersagefilter geliefert wird, in ein Signal $S_{(n)}$ gemäß folgender Gleichung umgewandelt wird:

$$S_{(n)} = y_{(n)} + \sum_{i=1}^{p} a_i \cdot S_{(n-i)} \tag{2}$$

wobei die Parameter $a_i$ (i = 1,...,p) die spektralen Parameter für die Modellbildung des Sprachsignals bedeuten und n die Werte von n = 0 bis n = $N_{var}$-1 annimmt.

6. Vorrichtung zur Durchführung eines Verfahrens zur Sprachsynthese mit variierbarer Geschwindigkeit, bei dem das Signal in Rahmen und Unterrahmen zerlegt wird, gekennzeichnet durch

   a) einen Anregungsgenerator, der eine Auswahl von Wellenformen aus einem Thesaurus während vorbestimmter Zeitintervalle durchführt,
   b) ein Langzeit-Vorhersageorgan,
   c) und ein Kurzzeit-Vorhersageorgan,
   die in dieser Reihenfolge in Serie geschaltet sind, wobei
   d) der Generator Mittel aufweist, um ein Anregungssignal variabler Dauer zu liefern,
   e) und die Vorhersageorgane Mittel besitzen, um die Rechenbereiche abhängig von der Synthesegeschwindigkeit des Sprachsignals ohne Veränderung der Pitchwerte des Sprachsignals variierbar zu machen, die an das Langzeit-Vorhersageorgan angelegt werden.

**Claims**

1. Method for vocal synthesis at variable speed, according to which the signal is segmented into frames and sub-frames respectively comprising N and L speech samples and is reconstituted from a selection of waveforms ($x_n$) in a dictionary during predetermined time intervals to excite (1) long-term (2) and short-term (3) predictive filters, characterized in that said method consists in modifying the duration ($L_{var}$) of excitation of the long-term predictive filter (2) and the ranges of computation ($L_{var}/N_{var}$) of the predictive filters as a function of the speed of synthesis of the vocal signal without modifying the values of the pitch of the vocal signal applied to the long-term predictor (2).

2. Method according to Claim 1, characterized in that it consists in modifying the size $N_{var}$ of the frames and the size $L_{var}$ of the sub-frames with respect to an initial frame size N and an initial sub-frame size L in a constant ratio r such that:

$$r = \frac{L_{var}}{L} = \frac{N_{var}}{N}$$

3. Method according to Claim 2, characterized in that it consists in expanding the initial size N of the excitation samples to reduce the speed of synthesis and in contracting their initial size N to increase the speed of synthesis.

4. Method according to Claims 2 and 3, characterized in that each waveform $x_{(n)}$ of the dictionary is converted into a signal $y_{(n)}$ according to the relationship

$$y_{(n)} = x_{(n)} + \beta_1 \, y_{(n-M-1)} + \beta_2 \, y_{(n-M)} + \beta_3 \, y_{(n-M+1)} \tag{1}$$

where $\beta_1$, $\beta_2$, $\beta_3$ are energy coefficients, M is a coefficient that represents the value of the pitch of the speech signal, and in which n takes the values from n = 0 to $L_{var}$-1.

5. Method according to any one of Claims 2 to 4, characterized in that the signal $y_{(n)}$ delivered by the long-term predictor is converted into a signal $S_n$ according to the relationship:

$$S_{(n)} = y_{(n)} + \sum_{i=1}^{p} a_i \cdot S_{(n-i)} \tag{2}$$

according to which the $a_{i(i=1,\ldots,p)}$ parameters represent spectral parameters for modelling the speech signal and in which n takes the values from n = 0 to $N_{var}$-1.

6. Device for implementing a method for vocal synthesis at variable speed, according to which the signal is segmented into frames and sub-frames,
   characterized by

   a) an excitation generator selecting waveforms from a dictionary during predetermined intervals,
   b) a long-term predictor, and
   c) a short-term predictor,
   which are coupled in this order in series,
   and in which
   d) the generator possesses means for delivering an excitation signal of variable duration, and
   e) the predictors have means for making the ranges of computation variable as a function of the speed of synthesis of the vocal signal without modifying the values of the pitch of the vocal signal applied to the long-term predictor.

FIG.1

FIG.2

FIG.3

# FIG.4